# NEW EUROPEAN PATENT SPECIFICATION

(11) **EP 0 331 228 B2**
(45) Date of publication and mention of the opposition decision: **29.04.1998**
(45) Mention of the grant of the patent: 01.09.1993
(21) Application number: 89200367.4
(22) Date of filing: 14.02.1989
(51) Int. Cl.: B01D 53/14, C01B 17/04

(54) **Process for removing H2S from a gas stream**
Verfahren zum Entfernen von H2S aus einem Gasstrom
Procédé pour l'élimination de H2S d'un courant de gaz

(30) Priority: 29.02.1988 GB 8804728
(43) Date of publication of application: 06.09.1989
(73) Proprietor: SHELL INTERNATIONALE RESEARCH MAATSCHAPPIJ B.V., 2596 HR Den Haag (NL)
(72) Inventor: Takenaka, Senji c/o JGC Corporation, Chiyoda-ku Tokyo 100 (JP)

(56) References cited:
- EP-A- 5 572
- EP-A- 0 054 772
- EP-A- 0 073 074
- DE-A- 2 409 378
- DE-A- 2 644 617
- US-A- 4 001 386
- "Shell's cascade process on well effluent from Eustace field cuts capital and operating cost", C. B. Wallace and A. J. Flynn, Oil & Gas Journal, Sept. 26, 1983, TECHNOLOGY, pages 94 - 97
- Shell Claus offgas treating process (SCOT)", Hydrocarbon Processing, April 1986, page 90
- "Acid and Sour Gas Treating Processes", Stephen A. Newman, Gulf Publishing Company, Book Division, Houston* London* Paris* Tokyo, 1985, pages 370-387
- "Sour-Gas Processing and Sulfur Recovery", The Petrolium Publishing Company, Tulsa, Oklahoma 74101, 1979, pages 22-24, "Improve economics of acid-gas treatment", Robert S. Smith

## Description

The present invention relates to a process for removing H₂S from a gas stream.

In EP-A-00 73 074 is disclosed a process for removing H₂S from a gas comprising the steps of
a) contacting the gas stream in a first absorption zone with regenerable aqueous absorbent to obtain first purified gas and an H₂S-containing loaded absorbent;
b) supplying the loaded absorbent from the first absorption zone to a regenerator provided with a reboiler where the absorbent is regenerated producing an H₂S-containing regenerator off-gas;
c) supplying at least part of the regenerator off-gas to a sulphur recovery plant in which elemental sulphur is produced and in which a plant off-gas is formed containing SO₂ and H₂S;
d) converting SO₂ in plant off-gas to H₂S to obtain reduced plant off-gas;
e) contacting reduced plant off-gas in a second absorption zone with regenerable aqueous absorbent to obtain a second purified gas and an H₂S-containing semi-loaded absorbent; and
f) passing the semi-loaded absorbent from the second absorption zone to the regenerator where the absorbent is regenerated.

In the known process loaded absorbent is totally regenerated and supplied from the regenerator to the first absorption zone and to the second absorption zone.

Regeneration in the regenerator is being carried out by reboiling the absorbent to obtain stripping steam which strips in the regenerator H₂S from the absorbent to produce an H₂S-containing regenerator off-gas.

It is an object of the present invention to reduce the amount of heat required to regenerate loaded absorbent.

To this end the process for removing H₂S from a gas stream according to the present invention is characterized in that the process further comprises removing regenerable totally regenerated absorbent from the regenerator and supplying the totally regenerated absorbent to the second absorption zone and to the reboiler only; and removing partly regenerated absorbent from the regenerator and supplying this to the top of the first absorption zone.

The invention will now be described by way of example in more detail with reference to the drawings, wherein
- Figure 1: shows schematically a flow scheme of a first embodiment of the invention; and
- Figure 2: shows schematically a flow scheme of a second embodiment of the invention.

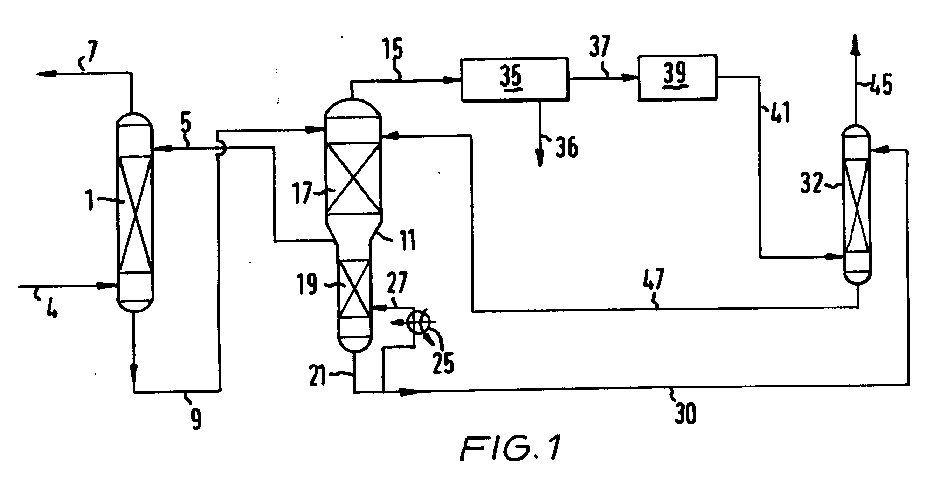

Reference is now made to Figure 1. The gas stream containing H₂S is supplied to a first absorption zone 1 through conduit 4. In the first absorption zone 1 the gas stream is contacted with a regenerable aqueous absorbent supplied through conduit 5 to obtain purified gas removed from the first absorption zone 1 through conduit 7 and an H₂S-containing loaded absorbent removed from the first absorption zone 1 through conduit 9.

Suitably the absorbent used is an aqueous composition comprising a weak base, for example an alkanol amine containing 1-4, and preferably 2-3 carbon atoms per alkanol group such as diethyl monoethanol amine, methyl diethanol amine or diisopropanol amine and optionally a physical solvent, for example sulfolane. The absorbent comprises between 25 and 55% by weight base, between 5 and 75% by weight water, and between 0 and 55% by weight physical solvent.

Contacting in the first absorption zone 1 is suitably effected at an absolute pressure between 0.1 and 25 MPa, and at a temperature between 30 and 90 °C.

The loaded absorbent from the first absorption zone 1 is supplied to a regenerator 11 where the absorbent is regenerated producing an H₂S-containing regenerator off-gas removed from the regenerator 11 through conduit 15.

The regenerator 11 comprises two sections, an upper regeneration section 17 and a lower regeneration section 19. The absorbent regenerated in the upper regeneration section 17 only is referred to as partly regenerated absorbent. Part of the partly regenerated absorbent is supplied through conduit 5 to the first absorption zone 1. The level at which partly regenerated absorbent is removed from the regenerator 11 is such that the H₂S concentration in the absorbent is in equilibrium with a gas mixture having an H₂S content which is between 1 and 1/3 of the H₂S content of the purified gas leaving the first absorption zone 1 at a pressure and a temperature prevailing in the top of the first absorption zone 1.

The remaining part of the partly regenerated absorbent is further regenerated in the lower regeneration section 19 to obtain totally regenerated absorbent. Totally regenerated absorbent is removed from the regenerator 11 through conduit 21. Part of the totally regenerated absorbent is supplied to reboiler 25 and steam generated in the reboiler 25 is introduced through conduit 27 into the lower part of the regenerator 11 as stripping agent. The remaining part of the totally regenerated absorbent is supplied through conduit 30 to second absorption zone 32. The H₂S concentration in the totally regenerated absorbent is in equilibrium with a gas mixture having an H₂S content which is between 1 and 1/3 of the H₂S content of second purified gas leaving the second absorption zone 32 at a pressure and a temperature prevailing in the top of the second absorption zone 32.

Regeneration of the absorbent is effected at a temperature between 100 and 190 °C, and at an absolute pressure between 0.1 and 0.3 MPa.

H₂S-containing regenerator off-gas removed from the regenerator 11 through conduit 15 is supplied to a sulphur recovery plant which is schematically shown and referred to with reference numeral 35.

In the sulphur recovery plant 35 elemental sulphur is produced according to the Claus reaction, in which part of the H₂S is oxidized to SO₂ which reacts with the remaining H₂S to form elemental sulphur. To this end the sulphur recovery plant 35 comprises a burner (not shown) and at least one catalytic reactor (not shown) having a sulphur condenser (not shown). Elemental sulphur is removed from the sulphur recovery plant through conduit 36.

Plant off-gas which contains SO₂ and H₂S is supplied through conduit 37 to a conversion unit 39 in which SO₂ is converted into H₂S to obtain reduced plant off-gas.

In the conversion unit 39 off-gas from the sulphur recovery unit 35 is reduced in the presence of a reducing gas, H₂ and/or CO, contacted with a suitable catalyst at a temperature between 180 and 450 °C. Suitable catalysts are sulphided catalysts of a Group VI and/or Group VIII metal supported on an inorganic oxidic carrier.

The reduced plant off-gas is supplied through conduit 41 to the second absorption zone 32. In the second absorption zone 32 reduced plant off-gas is contacted with regenerable aqueous absorbent supplied through conduit 30 to obtain a second purified gas removed from the second absorption zone 32 through conduit 45 and an H₂S-containing semi-loaded absorbent. The semi-loaded absorbent is passed directly to the regenerator 11 through conduit 47.

Contacting in the second absorption zone 32 is suitably effected at an absolute pressure between 0.1 and 0.2 MPa, and at a temperature between 15 and 65 °C.

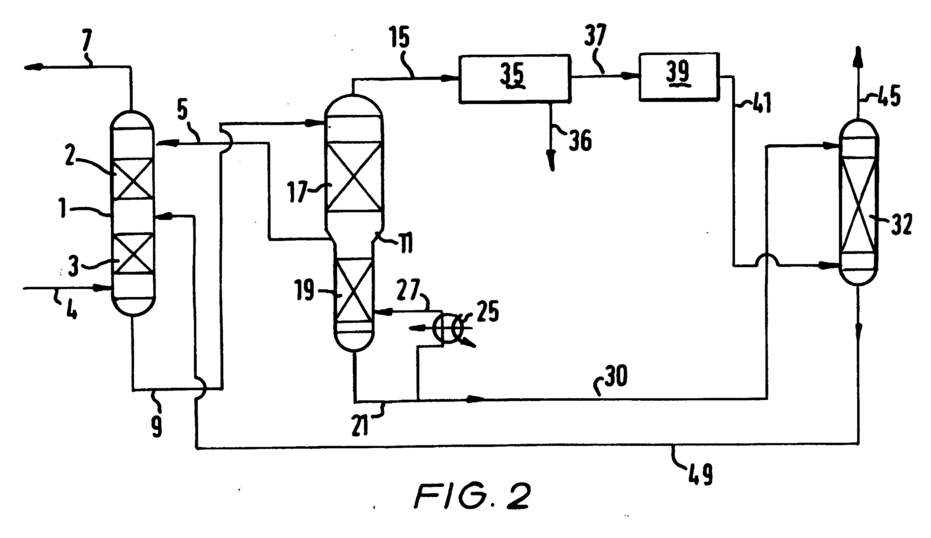

Reference is now made to Figure 2 showing an alternative flow scheme. Parts in the flow scheme as shown in Figure 2 which are identical to parts in the flow scheme as shown in Figure 1 have been given the same reference numerals.

The first absorption zone 1 comprises an upper part 2 and a lower part 3. The gas stream containing H₂S is supplied to the first absorption zone 1 through conduit 4. In the lower part 3 of the first absorption zone 1 the gas stream is contacted with a regenerable aqueous absorbent supplied through conduit 49, and in the upper part 2 with a regenerable aqueous absorbent supplied through conduit 5 to obtain purified gas removed from the first absorption zone 1 through conduit 7. The absorbent descending from the upper part 2 of the first absorption zone joins the absorbent supplied through conduit 49 to treat the gas in the lower part 3, and an H₂S-containing loaded absorbent is removed from the lower end part of the first absorption zone 1 through conduit 9. The absorbent used and the conditions during contacting are the same as those described with reference to Figure 1.

The loaded absorbent from the first absorption zone 1 is supplied to the regenerator 11 where the absorbent is regenerated producing an H₂S-containing regenerator off-gas removed from the regenerator 11 through conduit 15. Totally regenerated absorbent is removed from the regenerator 11 through conduit 21. Part of the totally regenerated absorbent is supplied to reboiler 25 and steam generated in the reboiler 25 is introduced through conduit 27 into the lower part of the regenerator 11 as stripping agent. The remaining part of the totally regenerated absorbent is supplied through conduit 30 to the second absorption zone 32. The conditions during regeneration are the same as those described with reference to Figure 1.

H₂S-containing regenerator off-gas removed from the regenerator 11 through conduit 15 is supplied to the sulphur recovery plant 35. Elemental sulphur is removed from the sulphur recovery plant through conduit 36. The sulphur recovery plant 35 further produces a plant off-gas is formed containing SO₂ and H₂S, this plant off-gas is supplied through conduit 37 to the conversion unit 39 in which SO₂ is converted into H₂S to obtain reduced plant off-gas.

The reduced plant off-gas is supplied through conduit 41 to the second absorption zone 32. In the second absorption zone 32 reduced plant off-gas is contacted with regenerable aqueous absorbent supplied through conduit 30 to obtain a second purified gas removed from the second absorption zone 32 through conduit 45 and an H₂S-containing semi-loaded absorbent. The conditions during contacting in the second absorption zone are the same as those described with reference to Figure 1. Passing the semi-loaded absorbent from the second absorption zone 32 to the regenerator 11 includes supplying the semi-loaded absorbent through conduit 49 to the upper end of the lower part 3 of the first absorption zone 1. In the first absorption zone 1 the semi-loaded absorbent joins absorbent descending from the upper part 2 of the first absorption zone 1. The mixture of the absorbents is removed from the first absorption zone 1 and supplied to the regenerator 11 through conduit 9.

The level at which semi-loaded absorbent is introduced into the first absorption zone 1 is such that the H₂S concentration in the absorbent is in equilibrium with a gas mixture having an H₂S content which is between 1 and 1/3 of the H₂S content of the gas leaving the lower part 3 of the first absorption zone 1 at a pressure and a temperature prevailing in the top of that part of the first absorption zone 1.

If the H₂S concentration of the semi-loaded absorbent is sufficiently low, it can be mixed with the partly regenerated absorbent supplied to the first absorption zone 1 through line 5.

Part of the semi-loaded absorbent which is supplied through conduit 49 can be supplied directly to the regenerator 11.

The first absorption zone 1, the second absorption zone 32 and the regenerator 11 are provided with suitable contacting material, such as contacting trays, random packing or structured packing or combinations thereof.

## Claims

1. Process for removing H₂S from a gas stream comprising the steps of
a) contacting the gas stream (4) in a first absorption zone (1) with regenerable aqueous absorbent (5;5,49) to obtain first purified gas (7) and an H₂S-containing loaded absorbent (9);
b) supplying the loaded absorbent (9) from the first absorption zone (1) to a regenerator (11) provided with a reboiler (25) where the absorbent is regenerated producing an H₂S-containing regenerator off-gas (15);
c) supplying at least part of the regenerator off-gas (15) to a sulphur recovery plant (35) in which elemental sulphur (36) is produced and in which a plant off-gas (37) is formed containing SO₂ and H₂S;
d) converting (39) SO₂ in plant off-gas to H₂S to obtain reduced plant off-gas (41);
e) contacting reduced plant off-gas (41) in a second absorption zone (32) with regenerable aqueous absorbent (30) to obtain a second purified gas (45) and an H₂S-containing semi-loaded absorbent (47;49); and
f) passing the semi-loaded absorbent (47;49) from the second absorption zone (32) to the regenerator (11) where the absorbent is regenerated, characterized in that the process further comprises removing regenerable totally regenerated absorbent (30) from the regenerator (11) and supplying the totally regenerated absorbent to the second absorption zone (32) and to the reboiler (25) only; and removing partly regenerated absorbent (5) from the regenerator (11) and supplying this to the top of the first absorption zone (1).

2. Process as claimed in claim 1, wherein passing the semi-loaded absorbent (49) from the second absorption zone (32) to the regenerator (11) includes the step of supplying the semi-loaded absorbent (49) from the second absorption zone (32) to the first absorption zone (1).

3. Process as claimed in claim 2, wherein the semi-loaded absorbent (49) from the second absorption zone (32) is introduced into the first absorption zone (1) at a level below the level at which partly regenerated absorbent (5) is introduced into the first absorption zone (1).

## Patentansprüche

1. Verfahren zum Abtrennen von H₂S aus einem Gasstrom, umfassend die Verfahrensschritte
a) des Kontaktierens des Gasstroms (4) in einer ersten Absorptionszone (1) mit regenerierbarem wäßrigem Absorptionsmittel (5; 5,49) unter Erhalt eines ersten gereinigten Gases (7) und eines H₂S enthaltenden beladenen Absorptionsmittels (9);
b) des Einspeisens des beladenen Absorptionsmittels (9) aus der ersten Absorptionszone (1) in einen mit einem Aufkocher (25) versehenen Regenerator (11), in welchem das Absorptionsmittel unter Bildung eines H₂S-haltigen Regenerator-Abgases (15) regeneriert wird;
c) des Einspeisens mindestens eines Teils des Regeneratorabgases (15) in eine Schwefelwiedergewinnungsanlage (35), in welcher elementarer Schwefel (36) erzeugt wird, und in welcher außerdem ein SO₂ und H₂S enthaltendes Fabrikationsabgas (37) gebildet wird;
d) des Umwandelns des SO₂ im Fabrikationsabgas in einer Anlage (39) in H₂S unter Erhalt eines reduzierten Fabrikationsabgases (41);
e) des Kontaktierens des reduzierten Fabrikationsabgases (41) in einer zweiten Absorptionszone (32) mit regenerierbarem wäßrigem Absorptionsmittel (30) unter Erhalt eines zweiten gereinigten Gases (45) und eines H₂S-haltigen halbbeladenen Absorptionsmittels (47; 49); und
f) des Leitens des halbbeladenen Absorptionsmittels (47; 49) von der zweiten Absorptionszone (32) zum Regenerator (11), in welchem das Absorptionsmittel regeneriert wird, dadurch gekennzeichnet, daß das Verfahren außerdem die folgenden Maßnahmen umfaßt:
das Abziehen des regenerierbaren vollständig regenerierten Absorptionsmittels (30) aus dem Regenerator (11) und das Zuführen desselben nur zu der zweiten Absorptionszone (32) und dem Aufkocher (25), sowie das Abziehen von teilregeneriertem Absorptionsmittel (5) aus dem Regenerator und das Zuführen zum Kopf der ersten Absorptionszone (1).

2. Verfahren, wie in Anspruch 1 beansprucht, in welchem das Leiten des halbbeladenen Absorptionsmittels (49) von der zweiten Absorptionszone (32) zum Regenerator (11) den Schritt des Zuführens des halbbeladenen Absorptionsmittels (49) von der zweiten Absorptionszone (32) zur ersten Absorptionszone (1) umfaßt.

3. Verfahren, wie in Anspruch 2 beansprucht, in welchem das halbbeladene Absorptionsmittel (49) aus der zweiten Absorptionszone (32) auf einer Ebene in die erste Absorptionszone (1) eingespeist wird, welche unterhalb derjenigen Ebene liegt, auf welcher das teilregenerierte Absorptionsmittel (5) in die erste Absorptionszone (1) eingespeist wird.

## Revendications

1. Procédé pour éliminer l'hydrogène sulfuré d'un courant gazeux, comportant les étapes de
a) mettre en contact le courant gazeux (4), dans une première zone d'absorption (1) avec de l'agent absorbant aqueux (5;5,49), susceptible d'être régénéré, afin d'obtenir un premier gaz purifié (7) et un agent absorbant chargé (9), renfermant de l'hydrogène sulfuré;
b) transférer l'agent absorbant chargé (9) de la première zone d'absorption (1) dans un régénérateur (11) pourvu d'un rebouilleur dans lequel l'agent absorbant est régénéré pour obtenir un gaz (15) s'échappant du régénérateur et renfermant de l'hydrogène sulfuré;
c) transférer au moins une partie du gaz s'échappant du régénérateur (15) dans une installation de récupération du soufre (35) dans laquelle on produit du soufre élémentaire (36) et dans laquelle se forme un gaz s'échappant de l'installation (37), qui renferme de l'oxyde sulfureux et de l'hydrogène sulfuré;
d) convertir l'oxyde sulfureux (39) dans le gaz s'échappant de l'installation en hydrogène sulfuré afin d'obtenir un gaz réduit (41) s'échappant de l'installation;
e) mettre en contact le gaz réduit s'échappant de l'installation (41) dans une seconde zone d'absorption (32) avec un agent absorbant aqueux (30), susceptible d'être régénéré, afin d'obtenir un second gaz purifié (45) et un agent absorbant semi-chargé (47;49), renfermant de l'hydrogène sulfuré; et
f) faire passer l'agent absorbant semi-chargé (47;49) de la seconde zone d'absorption (32) dans le régénérateur (11) où l'agent absorbant est régénéré, caractérisé en ce que le procédé consiste en outre à évacuer de l'agent absorbant totalement régénéré régénérable (30) du régénérateur (11) et transférer l'agent absorbant totalement régénéré dans uniquement la seconde zone d'absorption (32) et le rebouilleur (25); et évacuer l'agent absorbant partiellement régénéré (5) du régénérateur (11) et le transférer dans la zone supérieure de la première zone d'absorption (1).

2. Procédé tel que revendiqué dans la revendication 1, dans lequel le transfert de l'agent absorbant semichargé (49) de la seconde zone d'absorption (32) vers le régénérateur (11) comporte l'étape consistant à transférer l'agent absorbant semi-chargé (49) de la seconde zone d'absorption (32) vers la première zone d'absorption(1).

3. Procédé tel que revendiqué dans la revendication 1, dans lequel l'absorbant semi-chargé (49) provenant de la seconde zone d'absorption (32) est introduit dans la première zone d'absorption (1) selon un taux inférieur au taux selon lequel l'agent absorbant partiellement régénéré (5) est introduit dans la première zone d'absorption (1).
